(19) Europäisches Patentamt
European Patent Office
Office européen des brevets

(11) **EP 4 756 632 A1**

(12) **EUROPEAN PATENT APPLICATION**

(43) Date of publication:
**10.06.2026 Bulletin 2026/24**

(21) Application number: **24218163.4**

(22) Date of filing: **06.12.2024**

(51) International Patent Classification (IPC):
**G06F 15/78** (2006.01)

(52) Cooperative Patent Classification (CPC):
**G06F 15/7821**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Axelera AI BV**
**5656AE Eindhoven (NL)**

(72) Inventors:
• **Cosemans, Stefan**
  **5656 AE EINDHOVEN (NL)**
• **Uytterhoeven, Roel**
  **5656 AE EINDHOVEN (NL)**
• **Hager, Pascal**
  **5656 AE EINDHOVEN (NL)**

(74) Representative: **Eisenführ Speiser**
**Patentanwälte Rechtsanwälte PartGmbB**
**Stralauer Platz 34**
**10243 Berlin (DE)**

(54) **PROCESSOR FOR IN-MEMORY COMPUTING**

(57) In-memory computing, IMC, processor, comprising a set of IMC banks that is grouped into a plurality of IMC processing stages, each of the IMC processing stages including either one IMC bank or two or more IMC banks in a parallel configuration. The IMC processing stages are each configured, in a given processing cycle of a temporal sequence of processing cycles, to receive a digital input data vector, and to process, using a respective set of weight data stored in the IMC banks of the respective IMC processing stage, the currently received input data vector to generate and provide a respective fraction of an output data vector. The IMC processor is configured to process any given input data vector using the set of IMC processing stages in a sequential processing order, the sequential processing order for the given input data vector advancing within the set of IMC banks one IMC processing stage per processing cycle of the temporal sequence of processing cycles.

Fig. 11

EP 4 756 632 A1

**Description**

The present disclosure relates to the field on in-memory computing (IMC). In particular, it relates to an IMC processor and to a method for operating an IMC processor.

Matrix-vector multiplications (MVMs) are critical operations in deep neural networks for artificial intelligence (AI) applications. In a neural network, each layer performs a linear transformation on input data, followed by a non-linear activation function. The linear transformation is mathematically represented as a matrix-vector multiplication, where the matrix contains the weights, typically learned parameters, and the vector is formed by the input data or by output data from a previous layer of the neural network. This operation is repeated across all layers in the network, rendering MVMs as the core of the neural network's functionality. Given the multiple layers and numerous neurons in each layer of a neural network, the MVM operations dominate the computational workload. Efficient hardware implementations of MVMs are hence critical.

In-memory computing (IMC) combines data storage and computation within the same hardware, minimizing data movement between memory and the processor. This can significantly improve performance and energy efficiency in comparison with traditional computer architectures. Digital in-memory computing (DIMC) specifically deals with performing digital computations like binary arithmetic or logical operations directly within or directly next to the memory cells.

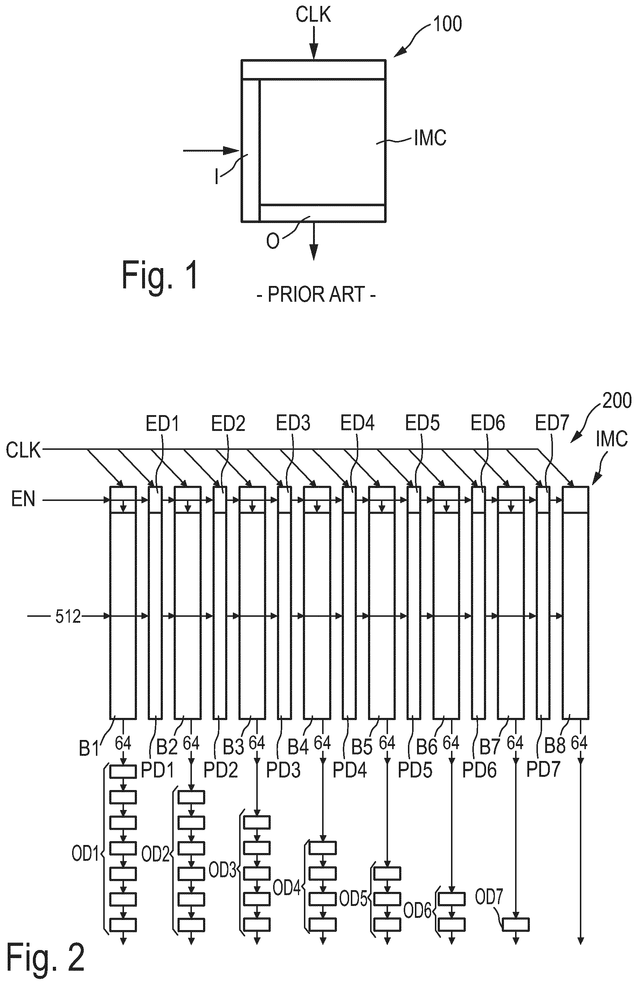

IMC is known to provide a very efficient way to implement MVMs. However, MVMs implemented by IMC processors may require the provision of large hardware units, which consume a large amount of current. For instance, with reference to Fig. 1, a digital IMC processor 100 driven by an external clock signal CLK has an input interface I for 512 1-bit inputs and 512 8-bit weights for its IMC processing unit IMC and a 512 bit wide output interface O. In this exemplary IMC processor 100, an estimated 10 nC of charge per processing cycle may be required for operation. The charge consumption is mostly related to the processing in the IMC processing unit in the processing cycle that follows when a stored input bit changes, in order to calculate the output. More specifically, when an input bit changes, a 1-bit product bit changes, which is provided to an adder tree where many internal signals change state as a consequence. At 800 MHz, i.e. 10 nC per 1.25 ns, this corresponds to a current of 8 A. This example shows that a steep increase in required current occurs at the onset of operation of an IMC processor, from nearly 0 A to 8 A in 1.25 ns in this example, and a similarly steep decrease of current at the end of operation of such a large IMC processor. A large step down in current amount also occurs whenever no new input vector is provided for one or more cycles, for instance because no input data is available or no space is available in an output buffer. Considering an accelerator that that comprises a plurality of such IMC processors operating in parallel, the current amount multiplies accordingly.

IMC processors can be implemented as integrated circuit units or as systems comprising integrated circuits, such as systems-on-chip (SOC) or systems-in-package (SIP). The mentioned current requirements represent a challenge to a power delivery network (PDN) that provides and distributes current to the individual active components of the IMC processor, in particular via power traces and decoupling capacitors. Due to the inherent (parasitic) inductance on the current path between an off-chip power source and the IMC processor arranged on-chip in a package, a required amount of charge to accommodate a steep change in the current requirements of the IMC processor may not be available immediately, leading to an undesired drop in input voltage. Insufficiency of available capacitance on chip may thus cause voltage drops or, in case of large current steps down, voltage overshoot and associated inductive noise in the form of ringing, all of which may compromise operational integrity of the IMC processor, because even small variations in voltage can affect the timing, logic levels, and overall performance of the circuits. For instance, the required voltage level to assume a desired state of a logical gate may not be achieved as quickly as necessary. This may cause a temporal functional error in the operation of the logic gate. Also, voltage overshoots and associated ringing in case of their voltage amounts approaching or even extending beyond a specified breakdown voltage of the semiconductor components may be a cause of decreased reliability in terms of hardware lifetime or even cause immediate hardware failure.

It is thus desirable to avoid functional failure or deterioration of hardware reliability of an IMC processor in view of sudden changes in current consumed by the IMC processor.

According to a first aspect of the present disclosure, an IMC processor according to claim 1 is provided. Embodiments are described in claims 2 to 12. A second aspect of the present disclosure is a computing system according to claim 13. A third aspect of the present disclosure is a method for operating an IMC processor according to claim 14.

According to the present disclosure, the IMC processor comprises a set of IMC banks that is grouped into a plurality of IMC processing stages. Each of the IMC processing stages comprises either one IMC bank or two or more IMC banks in a parallel configuration. While the IMC processing stages of the IMC processor all may have an identical configuration of IMC banks, and this forms a currently preferred embodiment, this identical configuration is not a requirement. For instance, instead of an IMC processor design where the IMC processing stages all have 8 IMC banks each, a set of IMC processing stages with alternating numbers of 7;9;7;9;... IMC banks may be used. Another deviation from the identical configuration of the IMC processing stages may be useful in designs, where one or more IMC bank is added for redundancy, for instance when the total amount of IMC banks does not divide nicely by the number of IMC processing stages.

The IMC processing stages are each configured, in a given processing cycle of a temporal sequence of processing cycles, to receive a digital input data vector and to process, using a respective set of weight data stored in the IMC banks of the respective IMC processing stage, the currently received input data vector to generate and provide a respective fraction of an output data vector. The IMC processor is configured to process any given input data vector using the set of IMC processing stages in a sequential processing order, the sequential processing order for the given input data vector advancing within the set of IMC banks one IMC processing stage per processing cycle of the temporal sequence of processing cycles.

The IMC banks thus form fundamental units within the IMC processor where data storage and computation occur. Each IMC bank contains its own set of memory cells and computational circuitry. An IMC bank may be described as a combination of memory cells that store the data to be processed and of computational units, which are additional circuits integrated with the memory cells that allow for basic digital operations to be performed directly on the data within the memory. These operations could include bitwise logic (AND, OR, XOR), addition, multiplication, or even more complex operations depending on the design.

By splitting the IMC processor into a set of IMC banks, which is grouped into a plurality of IMC processing stages that process any given input data vector in the described sequential processing order in the set of IMC banks, the amount of charge consumed per processing cycle changes less abruptly. In particular, a reduction is achieved in the difference in number of transistors of the computational elements of the IMC banks that are required to change their logic state between consecutive processing cycles because their inputs change, and/or, in case multiple weight sets are used, because of a compute_weight_set switch. This way, a change in the current amount required in the transition between consecutive processing cycles becomes more gradual.

The IMC processing stages may comprise not more than one IMC bank each. However, in other variants, each IMC processing stage does comprise more than one IMC bank. In this case, the IMC banks in a given IMC processing stage are operated in parallel. An exemplary implementation may have IMC processing stages with two IMC banks each controlled in parallel. E.g., in an IMC processor with 512 outputs, 16 IMC processing stages may be used, each activating 2 IMC banks with 16 outputs in parallel, thus a total of 32 IMC banks. The IMC processing stages of an IMC processor may all comprise an identical number of processing stages.

A division of the IMC fabric assigned to one IMC processing stage into multiple IMC banks is useful in cases where a single large IMC bank can be hard to implement and would result in very low flexibility in the floorplan of the chip when assembling the top level. Too many IMC small banks can lead to implementation inefficiencies, e.g. duplicated circuitry, or can lead to a top level that is hard to close because there are too many individual pieces that must be put together.

The total size of the IMC fabric is to be decided based on system specifications, e.g., considering how much compute throughput is needed in total. The number of IMC processing stages is then selected in a way that provides the optimal balance between smoothening of the current profile (dI/dt) on the one hand and implementation overhead (area, energy, and latency cost of extra pipeline stages) on the other hand.

Regarding an upper bound of the number of IMC banks per IMC processing stage, in designs where each IMC bank receives the entire input vector, the natural maximum of IMC banks per IMC processing stage equals the number of IMC bank outputs. E.g., if a specification requires an overall IMC processor of N inputs x M outputs, the natural maximum number of IMC banks is M. With e.g. 16 IMC processing stages, each stage then has M/16 IMC banks, each computing just one output.

However, it is also possible to split IMC banks in the other direction, i.e., one IMC bank receives inputs 0..255, and another IMC bank receives inputs 256..511. The total result then requires an extra accumulation between the outputs of the two IMC banks, which may be considered subbanks. Another exemplary design following this concept may benefit from splitting its 512 inputs in e.g. 16 subbanks, each taking in 32 inputs. Generally, IMC banks smaller than (16 inputs x 1 output) appear unlikely to be beneficial. Thus, a total number of N/16 x M IMC banks may be considered a maximum number for this design concept.

A processing cycle in the context of operating an IMC bank or IMC processing stage refers to the time it takes to complete a specific in-memory computation task, such as performing a bitwise operation or a small arithmetic operation within the memory cells. A processing cycle may span multiple clock cycles of a clock generator driving the IMC processor. For instance, a reduced effective clock frequency may be used to accommodate a longer internal delay. E.g., the IMC processor may run at 400MHz while an external clock runs at 800MHz. This allows fitting more logic depth in a single stage. The duration of a processing cycle may even vary depending on the specific operation under consideration.

Returning to the technical effect achieved with the IMC processor of the present invention, the rate of change of current, dI/dt, may be reduced in comparison with known designs. This reduces the burden on the power delivery network including the on-chip decoupling capacitance and thus facilitates maintaining consistent voltage levels and minimizing voltage drops, also helping to avoid overshoot and ringing. Therefore, the described risk of functional or hardware failure is reduced if not fully avoided. The solution of the present invention is particularly advantageous for a larger digital IMC processor that may draw a large current amount and may be subject to steep current change between consecutive processing cycles.

In comparison with known IMC processors, the IMC processor in accordance with the present invention can achieve a reduction of the cost of a power distribution network, for instance by allowing a design in a package having fewer metal layers and/or fewer decoupling capacitors. Considering as an alternative an unchanged budget for the power distribution network in comparison with known IMC processors, the IMC processor of the present invention allows achieving a higher IMC compute throughput.

The set of IMC banks may comprise, with regard to the sequential processing order, a first IMC processing stage, a last IMC processing stage, and an ordered subset of intermediate IMC processing stages arranged between the first IMC processing stage and the last IMC processing stage. The ordering of the ordered subset of intermediate IMC processing stages also refers to the sequential processing order, meaning that the subset has a second IMC processing stage, a third IMC processing stage, and so on, up to an IMC processing stage that forms the one before the last IMC processing stage.

The IMC processing stages of such a set of IMC banks may be configured to forward the currently received input data vector towards that IMC processing stage which is next in the sequential processing order, for respective processing of the given input data vector in a subsequent processing cycle by the IMC processing stage next in the sequential processing order.

An alternative way to achieve that sequential processing order for any given input vector in such a set of IMC banks is an IMC processor that comprises a data vector input pipeline with a set of data vector outputs, wherein each data vector output of the data vector input pipeline is connected to a data vector input of a respective one of the IMC processing stages in the set of IMC banks. The data vector input pipeline is configured to receive a sequence of data input vectors and to provide the received data input vectors to the set of IMC processing stages in a pipelined manner according to the sequential processing order. A given input data vector in the data vector input pipeline is thus moved forward one data vector output per processing cycle. Also in this way, with every processing cycle, the given input data vector is input to a next one of the IMC processing stages, until processed by all IMC processing stages.

The number of pipeline stages is suitably selected with regard to sufficiency of suppression of voltage drops or overshoots during circuit design. However, it should be taken into consideration that a large number of stages increases a required chip area, cost, and an undesirably high clock energy overhead. It is a circuit design task to find a sweet spot balancing the different effects for a given application case. This can be solved using simulations based on a suitable circuit model of the designed IMC processor. Regarding such an optimized number of pipeline stages, the set of IMC processing stages may comprise between 4 and 64, preferably between 8 and 32 IMC processing stages.

The control of the provision and forwarding of input data and processed data may be performed in a distributed manner. For instance, each sequential processing element may pass an input, or a command (e.g., a no-operation command) to the next sequential processing element. However, in addition or as an alternative to such distributed control, the IMC processor may comprise an input controller receiving the input data vectors. The input controller may be configured to control providing the received input data vectors to the set of IMC processing stages in accordance with a predetermined sequential processing order. Even in cases where the input vectors are passed on along a processing pipeline in accordance with a distributed manner of the control operation, the input controller may be useful for the control of processing variants which require central control, for instance when extra "no-operations" or dummy operations are to be performed along the processing pipeline.

To achieve a further reduction of dI/dt in the load current ramp and further improve power integrity, the controller is preferably further configured to determine those of the IMC processing stages, which in a next-coming processing cycle are to be processing respective previously received input data vectors. The input controller is suitably further configured to, upon determining that, in comparison with a predetermined processing cycle before the next-coming processing cycle, the number of IMC processing stages to be processing respective previously received input data vectors has increased by a predetermined difference, generate and provide delay-control signalling to the input unit for delaying a provision of a current input data vector, which would normally be due for provision to the first IMC processing stage in the next-coming processing cycle, for a predetermined number of processing cycles. A processing cycle of delay in launching a new input data vector into the set of IMC banks may be described as an insertion of a "no-operation" (NOP) processing cycle that keeps the input data vector components stored and processed by the first IMC processing stage and, in subsequent processing cycles, by the following IMC processing stages unchanged. This creates one or more intermittent processing cycles that do not require a change in load current for operating the first memory bank. This delay subsequently propagates through the set of IMC banks in the sequential processing order and thus further decreases the overall rate of change of load current, dI/dt, required by the IMC processor. Compared to splitting the IMC processor into even more IMC processing stages, this approach requires less hardware overhead and clock overhead. Furthermore, since it is driven by a controller, it can be enabled selectively under pre-specified conditions only, such as particularly heavy workloads or systems with low margins of tolerance regarding input voltage stability. This concept is well suited for application cases that do not have particularly high throughput requirements.

The input controller may additionally be configured to provide the delay-control signalling unit upon detecting a pre-defined delay trigger condition. For instance, a delay trigger condition may specify that delay-control signalling is triggered upon determining that providing a new input data vector to the first IMC processing stage would increase the number of active IMC processing stages, in comparison with two processing cycles back, by more than one, or by at most two IMC banks in comparison with 3 processing cycles back, or by one or more in comparison with three processing cycles back, or by two or more in comparison with 4 processing cycles back.

In order to reduce energy consumption of IMC banks during processing cycles in which they do not have to perform a computation, the IMC processing stages may be connected to a clock distribution network through respective clock gates. The clock gates receive an incoming clock signal and are configured to allow or block forwarding of the incoming clock signal to their associated IMC processing stages using a clock-gate allow signal or a clock-gate block signal, respectively. In an implementation of this approach, the input controller is configured to provide control signalling, for instance the clock-gate block signal, for blocking the clock gates of those of the IMC processing stages, which in a next-coming processing cycle are not to receive an input data vector to process. This achieves an idle state of an IMC processing stage by clock gating.

In an alternative approach for further reducing the rate of change of load current, dl/dt, the input controller is configured to provide to those of the IMC processing stages, which in a next-coming processing cycle are not to receive any of the input data vectors to process, the same respective input data vector as provided to those IMC processing stages in the previous processing cycle, thus keeping static the respective input data vectors to process. Thus, the IMC banks of the IMC processing stages may be clocked without interruption, but the input data vector is kept static, such that no changes occur in the logical states in the data path, and hence no charge is required to change logical states. Only the clock signals themselves consume charge.in the corresponding IMC banks.

In yet another approach that may be combined with the previously described solutions, the input controller is configured to spread the provision of the input data vectors to the IMC processing stages over two or more processing cycles, by providing a respective one of two or more input data vector fractions per processing cycle and keeping one or more complementary fractions unchanged in comparison with the respective preceding processing cycle in order to fill up the input data vector. This can be implemented for instance by using two processing cycles for consecutively providing to the first IMC processing stage two partial input data vectors: a first one that contains only a first fraction of the new input data vector components and otherwise has the same values as the preceding input data vector. In other words, this first partial input data vector is partially unchanged in comparison with the preceding input data vector to this first IMC bank. In the following second processing cycle, a second partial input data vector is provided to the first IMC processing stage, which is identical with the received actual input data vector. In this second processing cycle, thus, only a second fraction of the input data vector components, which is complementary to the first fraction, needs to be stored in the IMC processing stage because the first fraction was already stored in the first processing cycle. A processing result of the first IMC processing stage obtained during the first processing cycle is discarded by the first IMC processing stage. Storing and processing a vector component (bit value) of the given input data vector that is equal to the corresponding vector component of the preceding, already stored input data vector does not require charge and thus does not contribute to a change of current required by the IMC bank. Moving this spread input of the input data vector forward along the set of IMC processing stages in accordance with the sequential processing increases the overall timely spread of the required change of vector components, and thus decreases the rate change of current required by the IMC processor. These described measures can be applied similarly when using three instead of two consecutive processing cycles for providing an input data vector to the first IMC processing stage, thus spreading the required change of input data vector components in time even further.

The input controller may determine the fractions of the input data vector by simply dividing the input data vector in two or more coherent partitions. For example, a 512 bit input data vector may be partitioned into two fractions, one formed by vector components 1 to 256 and the other by components 257 to 512. In another, more sophisticated exemplary implementation the input controller first determines how many vector components of the preceding, currently stored input data vector have to be changed in total. For example, the total number of bit transitions that have to be performed in the one or more IMC banks of the first IMC processing stage for replacing the preceding input data vector with the given input data vector may be determined by a bitwise comparison of these two input data vectors. As will be appreciated, this total number of required bit transitions typically varies from input data vector to input data vector. The input controller is further configured to determine the input data vector fractions by evenly distributing the vector components to be changed in each of the input processing cycles. This way, the same (or approximately the same) number of required bit transitions may be performed in each of processing cycles used for inputting the given input data vector. This allows achieving a smooth, sufficiently slow rate of current change.

As will also be appreciated, a change of a vector component may or may not correspond to a single-bit transition. This depends on the storage technology used. Depending on the number of stable, physically distinguishable states an individual memory cell may assume, it may allow storing more than one bit, and the associated processing circuit for performing the MVMs may differ accordingly.

Yet another solution for further reducing the rate of current change, in this case particularly the ramp-down rate of the load current, comprises an input controller, which is configured to determine and provide a dummy data input vector to the first of the IMC processing stages that in a next coming processing cycle is not to receive any input data vector to process, and to determine the dummy data input vector so as to impose not more than a predetermined number of bit transitions in the respective IMC processing stages. The input controller is suitably further configured to determine the dummy data input vector such that a resulting charge consumption is in line with that of normal input vectors. For a digital IMC bank, the required charge amount mostly depends on input transitions. A dummy data input vector thus may be determined by selecting as components of the dummy data input vector a number of bits in the last provided input data vector, which selection is suitable to achieve a desired rate of decrease of vector component changes. The controller may be configured to trigger the determination and provision of a dummy data input vector only upon determining that a total number of predictable vector component changes in the IMC processor will decrease by more than a threshold rate over a predetermined number of processing cycles to come.

The scheme for reducing the ramp-down rate is similar to that described above for reducing the ramp-up rate in case of too fast activity increase. As an example, a dummy input vector D may be inserted in a situation where no real input data vector is available for provision to the first IMC bank, and where providing a NOP would result in a reduction of activity by more than -1 compared to two cycles ago.

Another reasonable option for determining the dummy data input vector D is a (pseudo)random vector with 50% 1's and 50% 0's as bit values randomly distributed. Consecutive inputs of dummy data input vectors preferably comprises using at least two different dummy input data vectors (D1, D2) to provide an alternating sequence to the first IMC processing stage, i.e., D1-D2-D1-D2.... For using a sequence of identical dummy data input vectors, i.e., D1-D1-D1... would not consume much charge. In another variant, the sequence of dummy data input vectors may comprise all different dummy input data vectors, i.e. D1-D2-D3-D4-..., in particular using random vectors, which are generated on the fly. More advanced schemes may keep track of the average number of toggling bits in prior input vector sequences, and create a vector with a similar number of input bit toggles compared to the last one. This could be implemented in hardware for on-the-fly determination, or a vector could be pre-defined by the compiler. As an example, if a current operation is only using 128 out of the 512 inputs, it could create dummy vectors that do not touch the other 384 inputs.

The sequential processing order imposed by pipelined input data vector provision according to the present disclosure including any of the examples described herein may be accompanied by the IMC processor further comprising an output circuit, which is configured, with a view to a given processed input data vector, to receive from the set of IMC banks the respective fractions of the output data vector generated in the different processing cycles of the temporal sequence of processing cycles, and to provide the output data vector upon completion of reception of its fractions.

A further aspect of the present disclosure is a computer system that comprises one or more IMC processors disclosed herein. The computer system shares the advantages of this IMC processor. The computer system is particularly suited for efficiently implementing a neural network for artificial intelligence (AI) applications. The IMC processor may be used in the neural network to perform tasks like matrix multiplications, convolutions, and other deep learning operations in an accelerated manner.

Yet another aspect of the present disclosure is a method for operating an in-memory computing, hereinafter IMC, processor that comprises a set of IMC banks that is grouped into a plurality of IMC processing stages, each of the IMC processing stages including either one IMC bank or two or more IMC banks in a parallel configuration, wherein the IMC processing stages are each configured, in a given processing cycle of a temporal sequence of processing cycles, to receive a digital input data vector, and to process, using a respective set of weight data stored in the respective IMC processing stage, the currently received input data vector to generate and provide a respective fraction of an output data vector, the method comprising
- the IMC processor processing any given input data vector in a sequential processing order in the set of IMC processing stages, the sequential processing order for the given input data vector advancing within the set of IMC processing stages one IMC processing stage per processing cycle of the temporal sequence of processing cycles.

Advantageous optional additional features of the method correspond to the optional additional features of the IMC processor described herein. Therefore, to avoid repetitions, no further description is given here for these additional features of the method.

The description now turns to further content, which will be described with reference to the enclosed drawings. In the drawings:

Fig. 1 is a block diagram of an IMC processor according to the prior art;

Fig. 2 is a block diagram of an IMC processor according to the present invention;

Fig. 3 is a block diagram of another IMC processor according to the present invention;

Fig. 4A is a diagram illustrating input to an in-memory processor as a function of time, as per se known in the art;

Fig. 4B is a diagram illustrating a current envelope associated with the input illustrated in Fig. 4A;

Fig. 5A is a diagram illustrating an input and processing scheme in an embodiment of an IMC processor in accordance with the present invention.

Fig. 5B is a diagram illustrating a current envelope associated with the input illustrated in Fig. 5A;

Fig 6A to 6E are simulation results of current (upper diagrams) and voltage (lower diagrams) in different IMC processors using an uninterrupted input sequence;

Fig 7A to 7E are simulation results of current (upper diagrams) and voltage (lower diagrams) in different IMC processors using an interrupted input sequence;

Fig. 8A is a diagram illustrating an input and processing scheme in another embodiment of an IMC processor in accordance with the present invention.

Fig. 8B is a diagram illustrating a current envelope associated with the input and processing scheme illustrated in Fig. 8A.

Fig. 9A is a diagram illustrating input to an in-memory processor as a function of time in accordance with another embodiment of the present invention;

Fig. 9B is a diagram illustrating a current envelope associated with the input illustrated in Fig. 9B;

Fig. 10 is a block diagram of an IMC processor according to a further embodiment of the invention; and

Fig. 11 and 12 are block diagrams of different variants of an IMC processor according to further embodiments of the present invention.

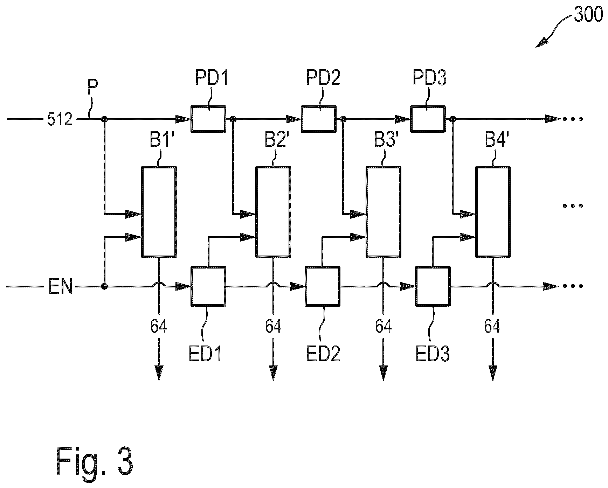

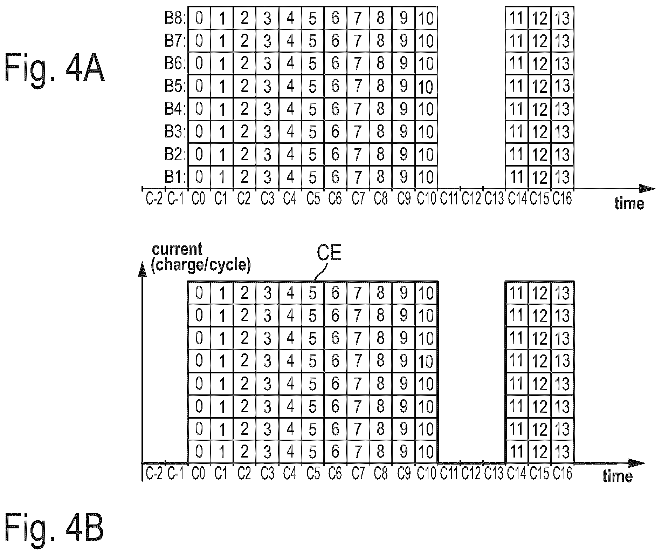

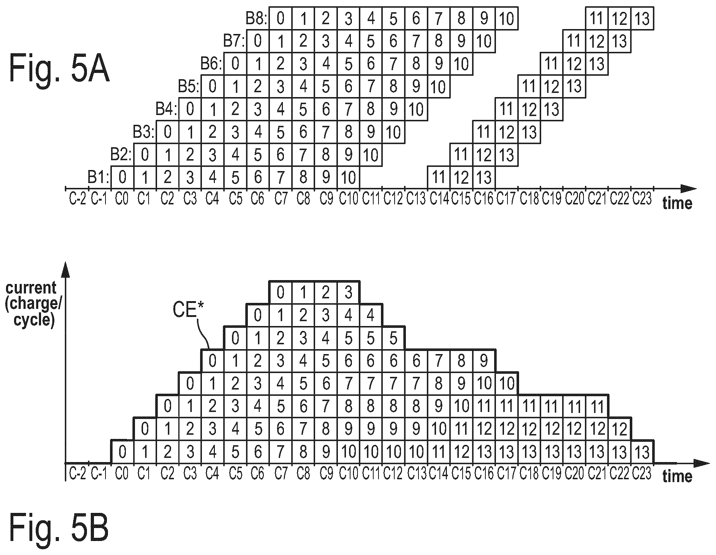

Fig. 2 is a block diagram of an IMC processor 200 according to the present invention. An IMC processor 300 shown in Fig. 3 is a variant of the IMC processor 200 of Fig. 2. The following description will first turn to a structural and operational description of the embodiments of Figs 2 and 3, before explaining the technical effects achieved with reference to Figs. 4A,B and 5A,B.

The exemplary IMC processor 200 serves for performing MVM of 512 bit wide input data vectors with a 512 x 512 weight matrix. The IMC processor 100 has a set of IMC banks that form IMC processing stages. In the present exemplary embodiment the IMC processor comprises eight IMC banks B1 to B8. Each of the IMC banks B1 to B8 stores 64 respective columns of the weight matrix. In a given processing cycle of a temporal sequence of processing cycles each IMC bank receives a respective digital input data vector and processes it, using the respective set of weight data stored in the respective IMC bank B1 to B8, to provide a respective fraction of an output data vector. More specifically, each IMC bank B1 to B8 receives 512 bit wide input data vectors and outputs a partial output data vector having a width of 64 bit. The IMC banks B1 to B8 thus perform similar tasks in their processing of a respective fraction of the MVM operation, involving a multiplication of the received input data vector components with stored weight values and an addition of the individual products to accumulate the results along a given matrix column. In this regard, Fig. 2 does not show details of the IMC banks, which are per se known, such as adder trees, memory cells, and circuitry related to storing the weight values in the memory cells. The IMC processor 200 is driven by a clock signal CLK, which in the present example is provided from an external clock source.

As will be explained in detail in the following, the IMC processor 200 is configured to process any given input data vector in a sequential processing order in the set of IMC banks B1 to B8. The set of IMC banks is ordered in the sense that it comprises, with regard to the sequential processing order, a first IMC bank B1, a last IMC bank B8 and an ordered subset of intermediate IMC banks B2 to B7 arranged between the first IMC bank B1 and the last IMC bank B8. The IMC banks B1 to B8 are configured to forward the currently received input data vector towards that IMC bank which is next in the sequential processing order. Thus, instead of providing a current input data vector to all IMC banks B1 to B8 in parallel, the provision of the given input data vector to the IMC banks B1 to B8 is staggered across a sequence of eight processing cycles. The IMC bank B1 receives the given input data vector in a first processing cycle, the IMC bank B2 receives this given input data vector not earlier than in a subsequent second processing cycle, the IMC bank B3 receives the input data vector not earlier than in a further subsequent third processing cycle, and so on, until this given input data vector reaches the IMC bank B8 in an eighth processing cycle of this sequence of eight consecutive processing cycles.

The sequential processing order for the given input data vector thus advances within the set of IMC banks one IMC bank per processing cycle. In the present embodiment, the sequential processing order is implemented using sets of delay elements (for example flip-flop based registers), which each impose a delay for one clock cycle, as will be explained in the following.

As mentioned, each of the IMC banks B1 to B7 forms an IMC processing stage and is configured to pass the received input data vector through to the respective next neighboring, i.e., subsequent IMC bank B2 to B8 via a respective processing delay element PD1 to PD7. The processing delay elements PD1 to PD7 each delay the provision of an input data vector present at their input side to the subsequent IMC bank by one clock cycle.

While not shown in Fig. 1, each IMC processing stages may comprise more than one IMC bank, wherein the IMC banks of an IMC processing stage are operated in parallel and all IMC processing stages may have an identical number of IMC banks. Configurations with non-identical numbers of IMC banks may also be useful, as explained above. This allows a processing a higher amount of data per IMC processing stage per processing cycle and thus increasing an efficiency of the IMC processor. On the other hand, the number of IMC banks per IMC processing stage is to be kept low enough to avoid re-introducing a high dI/dt due to larger individual IMC processing stages. It is noted that for simplicity of presentation, this embodiment and the following embodiments are shown with only one IMC bank per IMC processing stage.

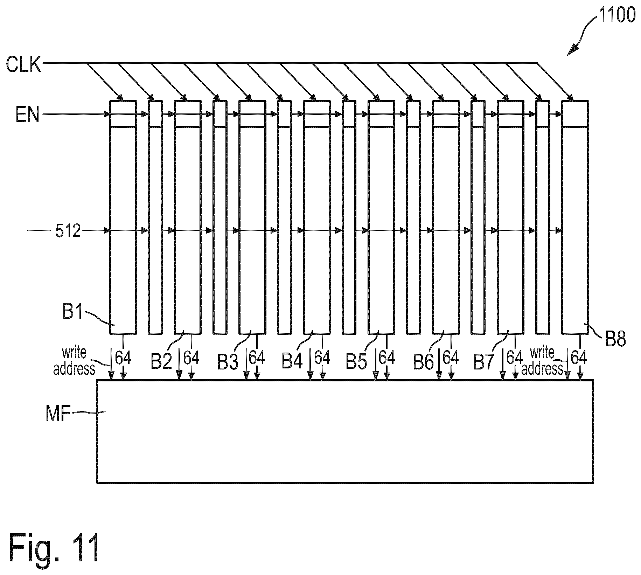

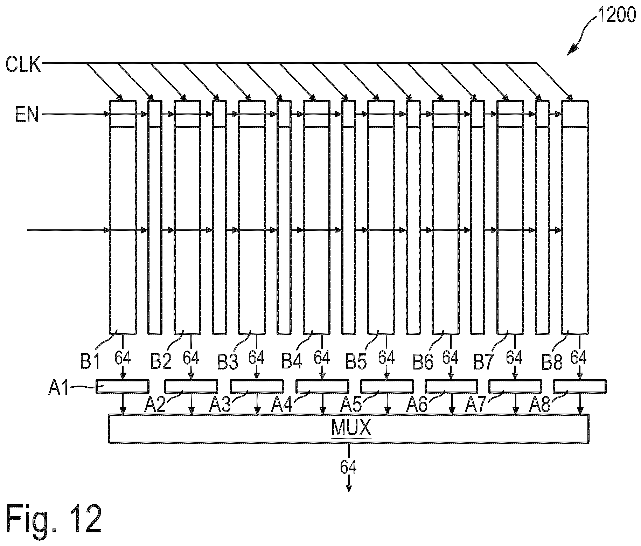

In some designs, a next block in the processing chain may require that its inputs be temporally aligned, i.e., that all outputs by the IMC processor 200 should be provided in the same processing cycle, However, that is a design choice and not a necessary restriction. For this case, to compensate for the staggered processing of a given input data vector by the IMC banks B1 to B8 and a resulting staggered output, the IMC processor 200 comprises respective output delay circuits OD1 to OD7 with individual output delay amounts. The output of the first IMC bank B1 is delayed by seven processing cycles using the output delay circuit OD1, the output of the second IMC bank B2 is delayed by six processing cycles using the output delay circuit OD2, and so on, up to the output delay circuit OD7, which delays the output from the IMC bank B7 by one processing cycle. The output of the IMC bank B8, which is the last in the processing sequence, is not delayed. This way, the complete output data vector is provided synchronously. Other circuit implementations for compensating the staggered processing by the IMC banks are possible and will be explained further below with reference to Figs. 11 and 12.

The IMC processor 200 further comprises circuitry for individually enabling or disabling the IMC banks B1 to B8 in synchrony with the staggered processing sequence. This achieves pausing operation of the individual IMC banks without interfering with the staggered processing sequence of a given input data vector. In other words, if the first IMC bank B1 is disabled in a first processing cycle, each of the subsequent IMC banks will be disabled with stepwise increasing delay, until the last IMC bank B8 is disabled 7 processing cycles later. A corresponding staggered enabling sequence is performed to restart the processing at the end of the disabled period.

In the present exemplary implementation, an enable signal is fed to the IMC bank B1 and on its way to the further IMC banks passes a sequentially increasing number of one-processing-cycle delays imposed by enable delay elements ED1 to ED7. The enable delay elements ED1 to ED7 are each connected between a respective pair of neighboring IMC banks among the IMC banks B1 to B8. Thus, the enable delay elements ED1 to ED7 are connected in a way corresponding to that of the processing delay elements PD1 to PD7. As such they forward any change of the enabling signal EN in synchrony with the staggered processing sequence applied to the input data vectors.

The processing delay elements, output delay elements and enable delay elements of the exemplary IMC processor 200 thus implement the staggered processing sequence for performing MVM for a given input data vector. An exemplary implementation of a delay element is a flip flop, for instance a D flip-flop, which captures an input value on a rising (or falling) edge of the clock signal and holds it until the next clock edge. The input value becomes available at the output Q of the flip-flop after the next clock edge, i.e., one clock cycle after the value was sampled. Other types of delay elements may be used, including pulsed latches (identical to FFs on the conceptual level) or a latch-based pipeline, with nonoverlapping clocks for consecutive elements. For the output delay elements, as a further alternative, instead of such the aforementioned solutions that implement a shift register with a respective number of stages, FIFOs with respective depth can be used. As mentioned, further variants will be discussed below with reference to Figs. 11 and 12.

An IMC processor 300 shown in Fig. 3 is a variant of the IMC processor 200 of Fig. 2. Here, for simplification of illustration, no clock distribution network, no output delay circuits and only four of the IMC banks, B1' to B4', are shown. The IMC processor 300 differs from that of Fig 2 in that the processing delay elements, from which in Fig. 3 only PD1 to PD3 are shown, and the enable delay, from which in Fig. 3 only ED1 to ED3 are shown, are provided in physical separation from the IMC banks B1' to B4'. Thus, whereas the IMC banks B1 to B8 of the IMC processor 200 of Fig. 2 are configured to forward the currently received input data vector towards that IMC bank which is next in the sequential processing order, an input pipeline P of the IMC processor 300 does not physically pass through the IMC banks B1' to B4'. The individual IMC Banks B1' to B4' do not forward the current input vector to their neighbor next in the processing sequence. Instead, the individual input lines to the IMC banks for providing the current input data vector branch off the input pipeline P, which also includes the processing delay elements PD1 to PD3.

Fig. 4A is an illustration of the provision and processing of input data vectors in an IMC processor having 8 IMC banks as a function of time, in a manner as per se known in the art. Fig. 4B is a diagram schematically illustrating an envelope of a required current amplitude associated with the input and processing operations by the IMC processor illustrated in Fig. 4A. In a corresponding manner of illustration, Fig. 5A represents the provision and processing of input data vectors in an IMC processor 8 IMC banks according to the embodiments of Figs. 2 and 3 as a function of time, and Fig. 5B is a diagram schematically illustrating an envelope of a required current amplitude associated with the input and processing operations illustrated in Fig. 5A. The following description refers to Figs. 4A through 5B in parallel.

In Figs. 4A through 5B, input data vectors are represented by numbered square boxes. In these illustrations, 14 input data vectors to the eight IMC banks B1 to B8 are labelled 0, 1, 2, ..., 13. The provision and processing of the input data vectors 0 to 13 is shown as a function of time (horizontal axis), where the time span covered by the diagrams is divided into a respective sequence of processing cycles labelled C-2, C-1, C0, C1, C2,..., C16 in Figs. 4A and 4B, and labelled C-2, C-1, C0, C1, C2,..., C23 in Figs. 5A and 5B.

Fig. 4A represents a conventional scheme of providing and processing an input data vector in a banked IMC processor. In this scheme, each input vector 0, 1, 2, ..., 13 is provided to all the IMC banks B1 to B8 simultaneously. After two initial processing cycles C-2, C-1 of no input, the sequence starts with the input data vector 0 being provided to the inputs of all IMC banks B1 to B8 in the same processing cycle C0 for performing their respective partial MVM operations. Similarly, in the next processing cycle C1, the input data vector 1 is present at the inputs of all IMC banks B1 to B8. In the next processing cycles C2 to C10, further input data vectors 2 to 10 are sequentially provided to the IMC banks B1 to B8, again always in parallel. With processing cycle C10, the input sequence stops, and between processing cycles C11 and C13 no further input data vector is fed to the IMC banks B1 to B8. Then, with processing cycle C14, the sequential provision and processing of three further input data vectors 11 to 13 begins, ending with processing cycle C16.

The input and processing scheme of Fig. 4A creates power delivery requirements which are schematically illustrated in Fig. 4B by way of an envelope of the required total current amount, labelled CE, over the time span shown in Fig. 4A. The current envelope CE, which is here given only schematically, can be determined from an estimate of a required charge amount per processing cycle. The illustration assumes for the purpose of simplification of explanation that the provision and processing of each input data vector to each of the IMC banks B1 to B8 requires an identical amount of current (charge/-cycle). A filling of the current envelope CE in the illustration of Fig. 4B serves to keep track of what operations are contributing to the required current in a respective processing cycle. For example, in processing cycle C0, the required current amount is determined by each of the IMC banks B1 to B8 receiving and processing the input data vector 0, which results in an estimated required current total amount that corresponds to eight times the current amount required by a single one of the IMC banks B1 to B8. The resulting current envelope CE has a rectangular shape spanning the processing cycles C0 to 10, and another rectangle between the processing cycles C14 to C16. This current envelope includes a steep current increase from zero to a maximum current amount within the processing cycle C0 and a subsequent span of a constant required current amount covering the processing cycles C1 to C10. With the end of the input and processing sequence at the end of processing cycle C10, a steep decrease occurs from this maximum current amount back to zero current. Another steep step-like increase occurs with the beginning of processing cycle C14, followed by a steep step-like decrease at the end of processing cycle C16.

As explained earlier, this required current envelope is estimated based in idealized assumption and does not correspond to the actual current that can be measured in a real IMC processor, due to effects of parasitics in the power distribution network (PDN). In particular, steep current ramps, up and down as described, trigger components of parasitic inductance in the PDN. Components of parasitic inductance play a major role in the PDN due to the high frequencies comprised in the frequency spectrum of the total current trace at these current ramps. The unavoidable presence of parasitic inductance in the PDN creates undesired voltage drops and voltage overshoots, depending on the direction of change of the total current amount, or, in other words the magnitude and sign of dI/dt. In combination with components of deliberate and parasitic capacitance, which are present in the PDN of real circuits, undesired current and voltage ringing conditions may occur. As explained earlier, at a clock frequency 800 MHz, a current ramp of 8 A within one clock cycle is not unusual for an IMC processor. This steep increase in required current at the onset of operation of the IMC processor in the processing cycles C0 and C14 is mirrored by a steep decrease of current at the end of operation after processing cycles C10 and C16.

Fig. 5A illustrates an exemplary alternative implementation of a scheme of providing and processing an input data vector in a banked IMC processor. For easier comparison with Figs. 4A and 4b, also in this scheme 14 input vectors 0, 1, 2, ..., are provided to the IMC banks. However, the processing is performed in a sequential processing order in the set of IMC banks B1 to B8. For instance, taking the input data vector 0, the input to the IMC banks and the processing in the IMC banks advances one IMC bank per processing cycle of the temporal sequence of processing cycles, starting with processing cycle C0 at the IMC bank B1, proceeding with the IMC bank B2 in processing cycle C1, and so on, up to the IMC bank B8 in processing cycle C7. Looking at processing cycle C1, while the input data vector 0 is being provided to the IMC bank B2, the IMC bank B1, which already processed input data vector 0 in the preceding processing cycle C0, is processing the next input data vector 1. This way, over the initial eight processing cycles C0 to C7 of receiving input data vectors, the exemplary IMC processor according to this embodiment increments the number of IMC banks in operation processing cycle by processing cycle, until all IMC banks B1 to B8 are in operation from processing cycle C7 on. As visible from Fig. 5B, this incremental ramping up of the processing operation of the IMC banks B1 to B8 is associated with a slowed increase in the required total current amount in comparison with Fig. 4B. While the envelope CE of required current in Fig. 4B reaches its maximum value right away in the processing cycle C0, the modified envelope CE* of the required total current amount in Fig. 5B follows a clearly smaller gradient of current overtime, reaching its maximum only in the processing C7. The reduced amplitude dI/dt corresponding to this gradient reduces the described adversary effects of parasitic inductance.

A corresponding observation applies for the down-ramp of current when no new input data vectors are received by the IMC processor. Three processing cycles without reception of new input data vectors starting in processing cycle C11 proceed through the IMC banks in the same staggered manner as describe before, thus creating a more gradual down-ramp of the required current amount, seen in comparison with the steep edge in the required total current after the processing cycle C10 in Fig. 4A. In the present example, the down-ramp associated with the three processing cycles of no input, which propagate through the IMC banks, overlaps with a new up-ramp starting in processing cycle C14 at the IMC bank B1.

It should be noted that the example described with reference to Figs. 5A and 5B above serves for general illustration of the inventive concept of processing any given input data vector in a sequential processing order in the set of IMC banks, the sequential processing order for the given input data vector advancing one IMC bank per processing cycle of the temporal sequence of processing cycles within the set of IMC banks.

This scheme of staggered input and processing can be varied in different ways. The following discusses variations in terms of the number of IMC banks that form a processing pipeline in the described sense in an IMC processor according to the present invention.

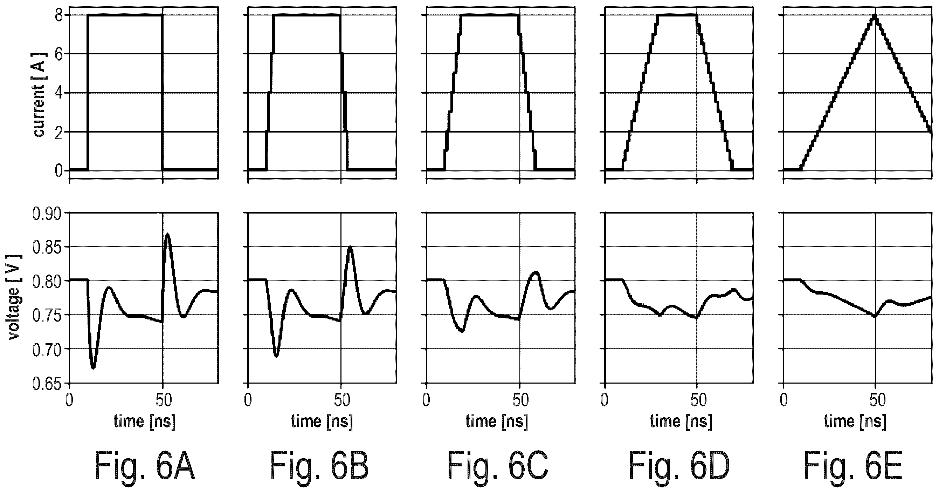

Fig 6A shows a simulation result providing the required total current (upper diagram) and the voltage between chip supply and chip ground (as probed, in simulation, on the top-metal layers of the chip, lower diagram) as a function of time in a banked IMC processor that processes input data vectors in parallel across its IMC banks and does not implement the staggered input and processing of the present invention. The voltages probed in simulation on the top-metal layers of the chip represent voltage drops over inductive and resistive elements in the package and on the PCB, but do not contain on-chip voltage drops all the way down to individual transistors (which are mostly resistive).

For comparison, Figs. 6B to 6E illustrate simulations of the required total current (upper diagram) and voltage (lower diagram) as a function of time in different IMC processors having different numbers of IMC banks for staggered input and processing, according to respective embodiments of the invention. In particular, the curves of Fig. 6B were obtained from simulations of an IMC processor with 4 IMC banks, the curves of Fig. 6C were obtained from simulations of an IMC processor with 8 IMC banks, the curves of Fig. 6D were obtained from simulations of an IMC processor with 16 IMC banks, and the curves of Fig. 6E were obtained from simulations of an IMC processor with 32 IMC banks. The simulations were performed based on an uninterrupted sequence of inputs of input data vectors within a time span of 50 nanoseconds.

Even with only 4 IMC banks, as in Fig. 6B, the trace of the required current shows a gradual increase and decrease at the edges rather than a vertical step as in Fig. 6A. The gradient of the edges becomes smaller upon increasing the number of IMC banks performing the staggered input and processing, cf. Figs. 6C to Fig. 6E (upper diagrams). As a consequence, the voltage traces associated with the current traces show decreasing amplitudes of excursions that occur at the times where the current exhibits the ramp up and the ramp down. A positive effect is already visible when using four IMC banks with the staggered input and processing approach. While not shown here, the inventors also found an effect on voltage excursions even when using only two IMC banks. Voltage excursions are not identifiable when using 16 IMC banks, and are even further flattened when using 32 IMC banks. While the voltage excursions due to the parasitic inductance represent high-frequency noise in the voltage traces, there is also low-frequency noise, which remains visible in particular in Fig. 6E. Such low-frequency noise is not an issue addressed by the present invention and can be addressed by known other means.

The simulations of Figs. 6B to 6E show that an effect of the staggered input and processing to reduce the amplitude of voltage excursions already exists when using 4 IMC banks. Increasing the number of IMC banks increases this effect, but on the other hand increases chip area requirement and clock energy overhead. A preferred number range therefore is between 8 and 32 IMC banks. While the examples in the simulations used only powers of 2 as the numbers of IMC banks, there is no restriction in this regard, and any even or uneven number of IMC banks equal to or higher than 2 can be chosen.

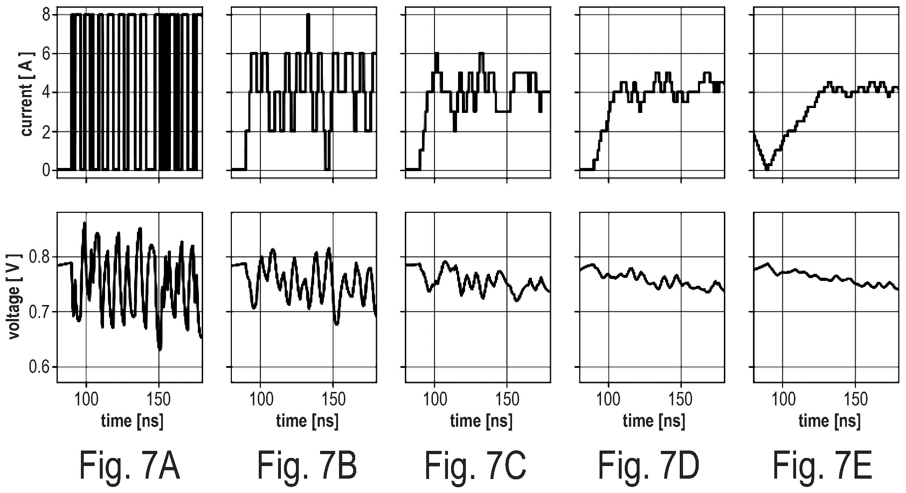

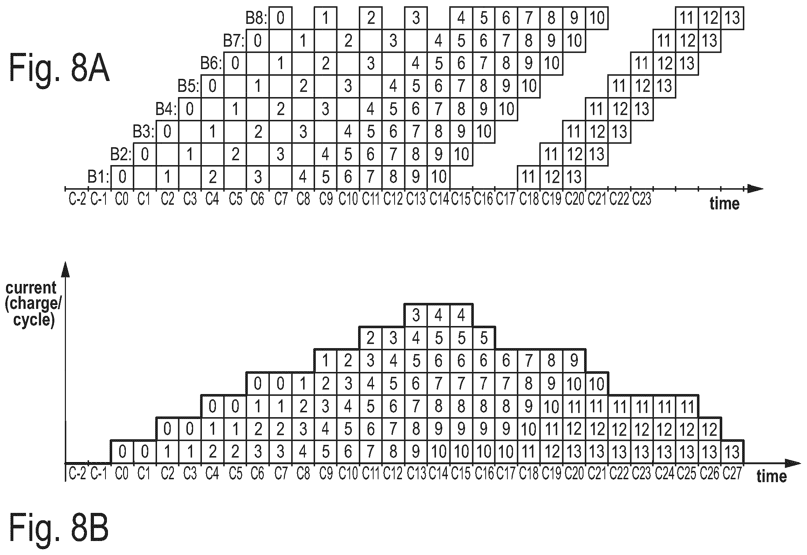

Figs. 7A to 7E illustrate the results of simulations similar to Figs. 6A to 6E, but using a different input sequence of input data vectors. Here, the input sequence is frequently interrupted, as best visible in the upper diagram of Fig. 7A, which shows the resulting required current undergoing many step like transitions between 0 and 8 Ampere. As the associated voltage trace in the lower diagram of Fig. 7A shows, this leads to strong high-frequency voltage noise. As in the sequence of Figs. 6B to 6E, Figs 7B to Fig. 7E show the effect of using the staggered input and processing according to the present invention with 4, 8, 16 and 32 IMC banks, respectively. Again, the steepness of the current transitions and the amplitude of the high-frequency noise decrease with increasing number of pipeline stages. Fig. 8A is a diagram illustrating an input and processing scheme in another embodiment of an IMC processor in accordance with another embodiment of the present invention. Fig. 8B is a diagram illustrating a current envelope associated with the input and processing scheme illustrated in Fig. 8A.

The input and processing scheme of this IMC processor embodiment differs from that of the Figs. 5A and B in that the IMC processor is configured to reduce the ramp-up rate of the required current even further to further improve power integrity, while allowing to avoid adding further IMC banks.

In this embodiment, the IMC processor comprises an input controller that is configured to control providing the received input data vectors to the set of IMC banks in accordance with a desired sequential processing order.

In particular, the input controller of the present embodiment is further configured to determine those of the IMC banks, which in a next-coming processing cycle are to be processing respective previously received input data vectors. Upon determining that, in comparison with a predetermined processing cycle before the next-coming processing cycle, the number of IMC banks to be processing respective previously received input data vectors has increased by a predetermined difference, the input controller generates and provides delay-control signalling for delaying a provision of a current input data vector due for provision to the first IMC bank in the next-coming processing cycle for a predetermined number of processing cycles.

An effect of such control operation illustrated in Fig. 8A, where the input controller delays provision of a new input vector to the first IMC bank B1 in the processing cycles C1, C3, C5 and C7. This delay propagates through the set of IMC banks and decreases the associated current gradient in the beginning phase of the input sequence even further, as shown in Fig. 8B.

The propagating controlled delay can be generated by different means. In one variant, the IMC banks are connected to a clock distribution network through respective clock gates, which receive an incoming clock signal and are configured to allow or block forwarding of the incoming clock signal to their associated IMC bank using a clock-gate allow signal or a clock-gate block signal, respectively. In this variant of the IMC processor, the input controller may be configured to provide the clock-gate block signal to the clock gates of those of the IMC banks, which in a next-coming processing cycle are not to receive an input data vector to process.

In another variant, input controller is configured, for those of the IMC banks, which in a next-coming processing cycle are not to receive any of the input data vectors to process, to keep the input data vector to the respective IMC bank static, or control a provision of the same input data vector as provided to the respective IMC bank in the previous processing cycle.

Another feature that further smoothens the current steps and that can be used in combination with the input and processing schemes described before, is to spread the provision of the input data vectors to the IMC banks over two or more processing cycles by providing a respective one of two or more input data vector fractions per processing cycle and keeping one or more complementary fractions unchanged in comparison with the respective preceding processing cycle in order to fill up the input data vector. This way, the current increase per processing cycle is made smaller because a fraction of the input data vector is kept unchanged in comparison with the previous processing cycle. Processing results associated with an intermediate input data vector that is a mix of "old" and "new" input data vectors are discarded.

Thus, by using an input controller that introduces further processing cycles of delay to the staggered input and processing scheme, be it in the form of clock gating or the provision of or non-operative, e.g. "empty" or "dummy" processing cycles, a gradient in an up-ramp of current can be made smaller without requiring the use of a larger number of IMC banks. This approach is particularly suited for embodiments of the IMC processor of the present invention which are limited to a smaller number of IMC banks.

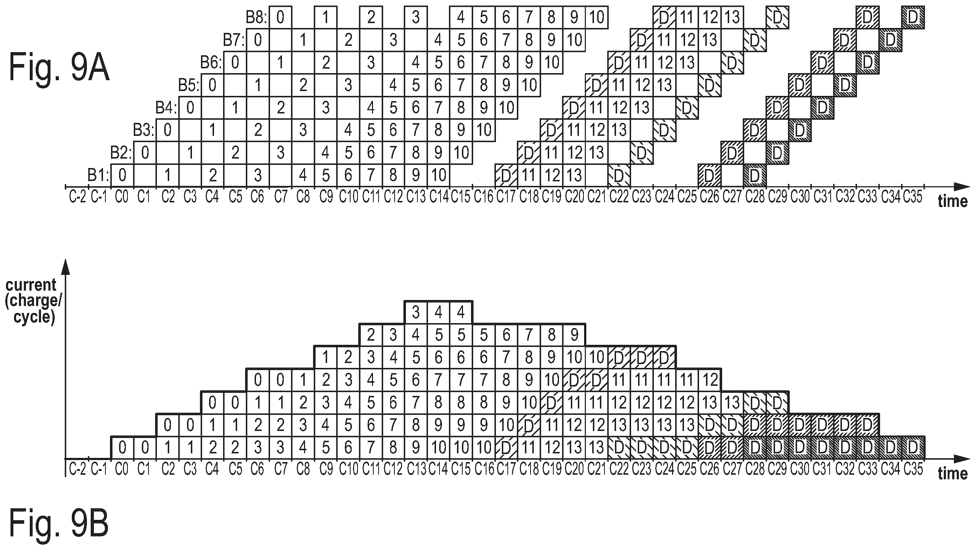

A further approach for reducing current gradient in the down-ramping phase will be described with reference to Figs. 9 and 9A in the following. Here the input controller is configured to determine and provide a dummy data input vector D to the first of the IMC banks upon determining that in a next-coming processing cycle the first of the IMC banks is not to receive any input data vector to process. In this case, the controller determines the dummy data input vector so as to impose not more than a predetermined number of bit transitions in the respective first IMC bank in comparison with the last provided input data vector. Thus, the dummy data vectors D determined and provided to the first IMC bank B1 at the different processing cycles, i.e. the processing cycles C17, C22, C26, C28 in Fig. 9A, will typically differ from each other because they depend on the respective preceding input data vector. Thus, the dummy input data vector is determined by selecting a suitable number of input bit transitions that slows down a decrease in charge consumption.

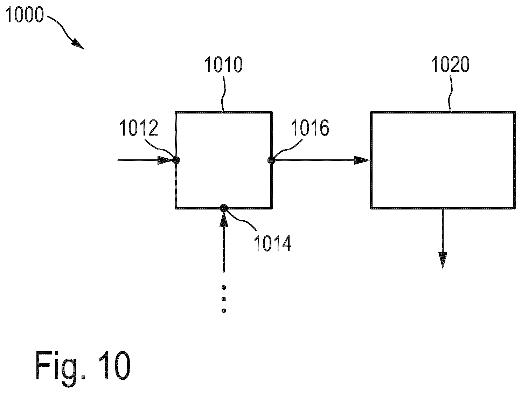

Fig. 10 is a simplified block diagram of an IMC processor 1000. The IMC processor 1000 comprises an input controller 1010 that has a data input 1012 for receiving incoming input data vectors, and that further has a control information input 1014 for receiving control information. The input controller 1016 further has a data output 1016 for providing input data vectors or any other input determined by way of its control operation to an IMC processing unit 1020 that comprises a set of IMC banks and implements the staggered input and processing scheme described herein, for instance as implemented in the embodiments of Figs. 2 and 3.

The input controller uses the incoming control information to determine what to feed forward to the first IMC bank of the IMC processing unit 1020. The control information may comprise a number of input data vectors currently stored in an input buffer (not shown). The input controller 1010 may use this information to determine a forecast of an up-ramp current gradient required by the IMC processing unit 1020 in a future time window that includes a number of future processing cycles. Depending on the determined forecast, the input controller may be operative to control the provision of input data vectors to the IMC processing unit 1020 in a manner that decreases the forecast future up-ramp current gradient, as described for instance in the context of the embodiment of Figs. 8A and 8B.

The control information may additionally or alternatively comprise information on free storage capacity of an output buffer (not shown). The input controller 1010 may use this information to determine a forecast of a down-ramp current gradient required by the IMC processing unit 1020 in a future time window that includes a number future processing cycles. Depending on the determined forecast, the input controller may be operative to control the provision of input data vectors to the IMC processing unit 1020 in a manner that decreases the forecast future down-ramp current gradient, as described for instance in the context of the embodiment of Figs. 9A and 9B.

The control information may additionally or alternatively comprise other information indicative of a current or future up-ramp or down-ramp current gradient in the IMC processing unit 1020.

In summary, an in-memory computing, IMC, processor, comprises a set of IMC banks, which are each configured, in a given processing cycle of a temporal sequence of processing cycles, to receive a digital input data vector and to process, using a respective set of weight data stored in the respective IMC bank, the currently received input data vector to generate and provide a respective fraction of an output data vector. The IMC processor is configured to process any given input data vector in a sequential processing order in the set of IMC banks, the sequential processing order for the given input data vector advancing one IMC bank per processing cycle of the temporal sequence of processing cycles within the set of IMC banks. This staggered input and processing sequence achieves a reduction in the rate of change of current required by the IMC banks, reducing the requirements for a power delivery network.

Fig. 11 and 12 are block diagrams of two different IMC processors 1100 and 1200 according further embodiments of the present invention. The overall structure of the IMC processors 1100 largely corresponds to that of the IMC processor 200 of Fig. 2. The following description only explains differences and discusses them with reference to Figs. 2, 11, and 12 in parallel.

The IMC processors 1100 and 1200 differ from the IMC processor 200 in their solutions for compensating for the staggered processing of the input data vectors by the IMC processing stages, which in these examples are shown as having one respective IMC bank B1 to B8 each. The embodiment of Fig. 2 has inputs, in which the input bits are fed in parallel ("bit-parallel"), and each IMC bank B1 to B8, or, more generally speaking, each IMC processing stage creates an output in each processing cycle. Output delay circuits OD1 to OD7 with individual output delay amounts provide for an alignment with regard to the processing cycle of output of the processing results of the individual IMC banks.

As an alternative for the case of "bit-parallel" inputs, in some designs, use can be made of the capability of a next block in the processing chain after the IMC processor to cope with the fact that outputs from the different IMC banks are not aligned. An exemplary implementation for such embodiments is the IMC processor 1100 of Fig. 11, which comprises a memory fabric MF that receives the individual outputs of the IMC banks B1 to B8. A write operation to the memory fabric MF including appropriate address information can then be issued as soon as the first output is available, and the next block in the processing chain can access the stored outputs according to its capability of handling unaligned outputs.

The further alternative shown in Fig. 12 applies to the case of a design with a bit-serial input. Here, the logical input vector of length N is divided into a corresponding number of N 1-bit input vectors applied consecutively. The IMC_BANKs compute the respective partial result

$$Yi = W \cdot Xi$$

W denotes the weight matrix stored in the IMC_BANK, $X_i$ the i-th 1-bit input vector such that

$$X = \sum_{i=0}^{N-1} 2^i X^i$$

Accumulators A1 to A8 are connected at the outputs of the individual IMC banks B1 to B8 to accumulate the total result

$$Y = \sum_{i=0}^{N-1} 2^i \, W \cdot X^i$$

Each of the accumulators A1 to A8 creates a complete result only once every 8 processing cycles. The results of the 8 accumulators A1 to A8 are time-multiplexed by a multiplier MUX, which is configured to output the results in the correct order.

In summary, the present disclosure is related to an IMC processor which comprises a set of IMC banks that is grouped into a plurality of IMC processing stages, each of the IMC processing stages including either one IMC bank or two or more IMC banks in a parallel configuration. The IMC processing stages are each configured, in a given processing cycle of a temporal sequence of processing cycles, to receive a digital input data vector and to process, using a respective set of weight data stored in the IMC banks of the respective IMC processing stage, the currently received input data vector to generate and provide a respective fraction of an output data vector. The IMC processor is further configured to process any given input data vector using the set of IMC processing stages in a sequential processing order. The sequential processing order for the given input data vector advances within the set of IMC banks one IMC processing stage per processing cycle of the temporal sequence of processing cycles.

## Claims

1. An in-memory computing, hereinafter IMC, processor, comprising,

   - a set of IMC banks that is grouped into a plurality of IMC processing stages, each of the IMC processing stages including either one IMC bank or two or more IMC banks in a parallel configuration; wherein
   - the IMC processing stages are each configured, in a given processing cycle of a temporal sequence of processing cycles,

      - to receive a digital input data vector;
      - to process, using a respective set of weight data stored in the IMC banks of the respective IMC processing stage, the currently received input data vector to generate and provide a respective fraction of an output data vector; wherein

   - the IMC processor is configured to process any given input data vector using the set of IMC processing stages in a sequential processing order, the sequential processing order for the given input data vector advancing within the set of IMC banks one IMC processing stage per processing cycle of the temporal sequence of processing cycles.

2. The IMC processor of claim 1, wherein

   - the set of IMC banks comprises, with regard to the sequential processing order, a first IMC processing stage, a last IMC processing stage and an ordered subset of intermediate IMC processing stages arranged between the first IMC processing stage and the last IMC processing stage; wherein
   - a given IMC processing stage is configured to forward the currently received input data vector towards that IMC processing stage which is next in the sequential processing order, for respective processing of the given input data vector in a subsequent processing cycle by the IMC processing stage next in the sequential processing order.

3. The IMC processor of claim 1, wherein

   - the IMC processing stages are arranged in parallel and comprise, with regard to the sequential processing order, a first IMC processing stage , a last IMC processing stage and an ordered subset of intermediate IMC processing stages between the first IMC processing stage and the last IMC processing stage; wherein
   - the IMC processor comprises a data vector input pipeline with a set of data vector outputs, each data vector output connected to a data vector input of a respective one of the IMC processing stages; wherein
   - the data vector input pipeline is configured to receive a sequence of data input vectors and to provide the received data input vectors to the IMC processing stages in a pipelined manner according to the sequential processing order.

4. The IMC processor of any of claims 1 to 3, wherein the set of IMC banks comprises between 4 and 64, preferably between 8 and 32 IMC banks.

5. The IMC processor of any of the preceding claims, further comprising

   - an input controller receiving the input data vectors and configured to control providing the received input data vectors to the set of IMC banks in accordance with the sequential processing order.

6. The IMC processor of claim 5, wherein the input controller is further configured to

   - determine those of the IMC processing stages,

which in a next-coming processing cycle are to be processing respective previously received input data vectors, and

- upon determining that, in comparison with a predetermined processing cycle before the next-coming processing cycle, the number of IMC processing stages to be processing respective previously received input data vectors has increased by a predetermined difference: generate and provide delay-control signaling to the input unit for delaying a provision of a current input data vector due for provision to the first IMC processing stage in the next-coming processing cycle for a predetermined number of processing cycles.

7. The IMC processor of any of the preceding claims, wherein the IMC processing stages are connected to a clock distribution network through respective clock gates, which receive an incoming clock signal and are configured to allow or block forwarding of the incoming clock signal to their associated IMC processing stage using a clock-gate allow signal or a clock-gate block signal, respectively.

8. The IMC processor of claims 5 and 7, wherein the input controller is configured to

- provide the clock-gate block signal to the clock gates of those of the IMC processing stages , which in a next-coming processing cycle are not to receive an input data vector to process.

9. The IMC processor of claims 5 and 7, wherein the input controller is configured to

- provide to those of the IMC processing stages, which in a next-coming processing cycle are not to receive any of the input data vectors to process, the same respective input data vector as provided to those IMC processing stages in the previous processing cycle, thus keeping static the respective input data vectors to process.

10. The IMC processor of claim 5, wherein the input controller is configured to

- spread the provision of the input data vectors to the IMC processing stages over two or more processing cycles by providing a respective one of two or more input data vector fractions per processing cycle and keeping one or more complementary fractions unchanged in comparison with the respective preceding processing cycle in order to fill up the input data vector.

11. The IMC processor of claims 2 and 5, wherein the input controller is configured to

- determine and provide a dummy data input vector to the first of the IMC processing stages if in a next-coming processing cycle it is not to receive any input data vector to process, and
- to determine the dummy data input vector so as to impose not more than a predetermined number of bit transitions in the first IMC processing stage.

12. The IMC processor of any of the preceding claims, further comprising

- an output circuit, which is configured, with a view to a given processed input data vector, to receive from the set of IMC processing stages the respective fractions of the output data vector generated in the different processing cycles of the temporal sequence of processing cycles, and to provide the output data vector upon completion of reception of its fractions.

13. A computer system, comprising one or more IMC processors according to any of the preceding claims.

14. A method for operating an in-memory computing, hereinafter IMC, processor that comprises a set of IMC banks that is grouped into a plurality of IMC processing stages, each of the IMC processing stages including either one IMC bank or two or more IMC banks in a parallel configuration, wherein the IMC processing stages are each configured, in a given processing cycle of a temporal sequence of processing cycles, to receive a digital input data vector, and to process, using a respective set of weight data stored in the respective IMC processing stage, the currently received input data vector to generate and provide a respective fraction of an output data vector, the method comprising

- the IMC processor processing any given input data vector in a sequential processing order in the set of IMC processing stages, the sequential processing order for the given input data vector advancing within the set of IMC processing stages one IMC processing stage per processing cycle of the temporal sequence of processing cycles.

Fig. 1

- PRIOR ART -

Fig. 2

Fig. 3

Fig. 4A

| | | | | | | | | | | | | | | | |
|---|---|---|---|---|---|---|---|---|---|---|---|---|---|---|---|
| B8: | 0 | 1 | 2 | 3 | 4 | 5 | 6 | 7 | 8 | 9 | 10 | | 11 | 12 | 13 |
| B7: | 0 | 1 | 2 | 3 | 4 | 5 | 6 | 7 | 8 | 9 | 10 | | 11 | 12 | 13 |
| B6: | 0 | 1 | 2 | 3 | 4 | 5 | 6 | 7 | 8 | 9 | 10 | | 11 | 12 | 13 |
| B5: | 0 | 1 | 2 | 3 | 4 | 5 | 6 | 7 | 8 | 9 | 10 | | 11 | 12 | 13 |
| B4: | 0 | 1 | 2 | 3 | 4 | 5 | 6 | 7 | 8 | 9 | 10 | | 11 | 12 | 13 |
| B3: | 0 | 1 | 2 | 3 | 4 | 5 | 6 | 7 | 8 | 9 | 10 | | 11 | 12 | 13 |
| B2: | 0 | 1 | 2 | 3 | 4 | 5 | 6 | 7 | 8 | 9 | 10 | | 11 | 12 | 13 |
| B1: | 0 | 1 | 2 | 3 | 4 | 5 | 6 | 7 | 8 | 9 | 10 | | 11 | 12 | 13 |

C-2 C-1 C0 C1 C2 C3 C4 C5 C6 C7 C8 C9 C10 C11 C12 C13 C14 C15 C16    time

Fig. 4B

current
(charge/cycle)

CE

| 0 | 1 | 2 | 3 | 4 | 5 | 6 | 7 | 8 | 9 | 10 | | 11 | 12 | 13 |
|---|---|---|---|---|---|---|---|---|---|---|---|---|---|---|
| 0 | 1 | 2 | 3 | 4 | 5 | 6 | 7 | 8 | 9 | 10 | | 11 | 12 | 13 |
| 0 | 1 | 2 | 3 | 4 | 5 | 6 | 7 | 8 | 9 | 10 | | 11 | 12 | 13 |
| 0 | 1 | 2 | 3 | 4 | 5 | 6 | 7 | 8 | 9 | 10 | | 11 | 12 | 13 |
| 0 | 1 | 2 | 3 | 4 | 5 | 6 | 7 | 8 | 9 | 10 | | 11 | 12 | 13 |
| 0 | 1 | 2 | 3 | 4 | 5 | 6 | 7 | 8 | 9 | 10 | | 11 | 12 | 13 |
| 0 | 1 | 2 | 3 | 4 | 5 | 6 | 7 | 8 | 9 | 10 | | 11 | 12 | 13 |
| 0 | 1 | 2 | 3 | 4 | 5 | 6 | 7 | 8 | 9 | 10 | | 11 | 12 | 13 |

C-2 C-1 C0 C1 C2 C3 C4 C5 C6 C7 C8 C9 C10 C11 C12 C13 C14 C15 C16    time

## Fig. 5A

| | C-2 | C-1 | C0 | C1 | C2 | C3 | C4 | C5 | C6 | C7 | C8 | C9 | C10 | C11 | C12 | C13 | C14 | C15 | C16 | C17 | C18 | C19 | C20 | C21 | C22 | C23 |
|---|---|---|---|---|---|---|---|---|---|---|---|---|---|---|---|---|---|---|---|---|---|---|---|---|---|---|
| B8: | | | | | | | 0 | 1 | 2 | 3 | 4 | 5 | 6 | 7 | 8 | 9 | 10 | | | | | 11 | 12 | 13 | | |
| B7: | | | | | | 0 | 1 | 2 | 3 | 4 | 5 | 6 | 7 | 8 | 9 | 10 | | | | | 11 | 12 | 13 | | | |
| B6: | | | | | 0 | 1 | 2 | 3 | 4 | 5 | 6 | 7 | 8 | 9 | 10 | | | | | 11 | 12 | 13 | | | | |
| B5: | | | | 0 | 1 | 2 | 3 | 4 | 5 | 6 | 7 | 8 | 9 | 10 | | | | | 11 | 12 | 13 | | | | | |
| B4: | | | 0 | 1 | 2 | 3 | 4 | 5 | 6 | 7 | 8 | 9 | 10 | | | | | 11 | 12 | 13 | | | | | | |
| B3: | | 0 | 1 | 2 | 3 | 4 | 5 | 6 | 7 | 8 | 9 | 10 | | | | | 11 | 12 | 13 | | | | | | | |
| B2: | 0 | 1 | 2 | 3 | 4 | 5 | 6 | 7 | 8 | 9 | 10 | | | | | 11 | 12 | 13 | | | | | | | | |
| B1: | 0 | 1 | 2 | 3 | 4 | 5 | 6 | 7 | 8 | 9 | 10 | | | | 11 | 12 | 13 | | | | | | | | | |

## Fig. 5B

current (charge/cycle)

CE*

| | C-2 | C-1 | C0 | C1 | C2 | C3 | C4 | C5 | C6 | C7 | C8 | C9 | C10 | C11 | C12 | C13 | C14 | C15 | C16 | C17 | C18 | C19 | C20 | C21 | C22 | C23 |
|---|---|---|---|---|---|---|---|---|---|---|---|---|---|---|---|---|---|---|---|---|---|---|---|---|---|---|
| | | | | | | | | | 0 | 1 | 2 | 3 | | | | | | | | | | | | | |
| | | | | | | | | 0 | 1 | 2 | 3 | 4 | 4 | | | | | | | | | | | | |
| | | | | | | | 0 | 1 | 2 | 3 | 4 | 5 | 5 | 5 | | | | | | | | | | | |
| | | | | | | 0 | 1 | 2 | 3 | 4 | 5 | 6 | 6 | 6 | 6 | 7 | 8 | 9 | | | | | | | |
| | | | | | 0 | 1 | 2 | 3 | 4 | 5 | 6 | 7 | 7 | 7 | 7 | 8 | 9 | 10 | 10 | | | | | | |
| | | | | 0 | 1 | 2 | 3 | 4 | 5 | 6 | 7 | 8 | 8 | 8 | 8 | 9 | 10 | 11 | 11 | 11 | 11 | 11 | 11 | | |
| | | | 0 | 1 | 2 | 3 | 4 | 5 | 6 | 7 | 8 | 9 | 9 | 9 | 9 | 10 | 11 | 12 | 12 | 12 | 12 | 12 | 12 | 12 | |
| | | 0 | 1 | 2 | 3 | 4 | 5 | 6 | 7 | 8 | 9 | 10 | 10 | 10 | 10 | 11 | 12 | 13 | 13 | 13 | 13 | 13 | 13 | 13 | 13 |

EP 4 756 632 A1

Fig. 6A  Fig. 6B  Fig. 6C  Fig. 6D  Fig. 6E

Fig. 7A          Fig. 7B          Fig. 7C          Fig. 7D          Fig. 7E

EP 4 756 632 A1

Fig. 8A

Fig. 8B

Fig. 9A

Fig. 9B

Fig. 10

Fig. 11

Fig. 12

| | Europäisches Patentamt European Patent Office Office européen des brevets | **EUROPEAN SEARCH REPORT** | **Application Number** EP 24 21 8163 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/068645 A1 (FUJIWARA HIDEHIRO [TW] ET AL) 2 March 2023 (2023-03-02)<br>* figures 1A, 2C, 3, 7A *<br>* paragraph [0024] - paragraph [0044] *<br>* paragraph [0106] - paragraph [0108] *<br>----- | 1-14 | INV.<br>G06F15/78 |
| X | WO 2021/028723 A2 (NEUROBLADE LTD [IL]; SITY ELAD [IL] ET AL.)<br>18 February 2021 (2021-02-18)<br>* figure 7A *<br>* paragraph [0010] *<br>* paragraph [0268] - paragraph [0374] *<br>* paragraph [0711] *<br>----- | 1-14 | |
| | | | **TECHNICAL FIELDS SEARCHED (IPC)**<br><br>G06F |

The present search report has been drawn up for all claims

| Place of search | Date of completion of the search | Examiner |
|---|---|---|
| The Hague | 25 May 2025 | De Poy, Iker |

## ANNEX TO THE EUROPEAN SEARCH REPORT
## ON EUROPEAN PATENT APPLICATION NO.

EP 24 21 8163

This annex lists the patent family members relating to the patent documents cited in the above-mentioned European search report.
The members are as contained in the European Patent Office EDP file on
The European Patent Office is in no way liable for these particulars which are merely given for the purpose of information.

25-05-2025

| Patent document cited in search report | Publication date | Patent family member(s) | Publication date |
|---|---|---|---|
| US 2023068645 A1 | 02-03-2023 | CN 115512729 A | 23-12-2022 |
| | | DE 102022101250 A1 | 02-03-2023 |
| | | KR 20230031757 A | 07-03-2023 |
| | | TW 202309899 A | 01-03-2023 |
| | | US 2023068645 A1 | 02-03-2023 |
| WO 2021028723 A2 | 18-02-2021 | CN 114586019 A | 03-06-2022 |
| | | EP 4010808 A2 | 15-06-2022 |
| | | KR 20220078566 A | 10-06-2022 |
| | | TW 202122993 A | 16-06-2021 |
| | | WO 2021028723 A2 | 18-02-2021 |

EPO FORM P0459

For more details about this annex : see Official Journal of the European Patent Office, No. 12/82